# EUROPÄISCHE PATENTSCHRIFT

(11) **EP 0 744 820 B1**
(45) Veröffentlichungstag und Bekanntmachung des Hinweises auf die Patenterteilung: **10.03.2004**
(21) Anmeldenummer: 96201380.1
(22) Anmeldetag: 21.05.1996
(51) Int. Cl.: H02M 7/5387

(54) **Schaltungsanordnung zum Speisen einer Last**
Circuit arrangement for feeding a load
Disposition de circuit pour alimenter une charge

(30) Priorität: 26.05.1995 DE 19519369
(43) Veröffentlichungstag der Anmeldung: 27.11.1996
(73) Patentinhaber: Philips Intellectual Property & Standards GmbH, 20099 Hamburg (DE); Koninklijke Philips Electronics N.V., 5621 BA Eindhoven (NL)
(72) Erfinder: Van der Broeck, Heinz, Dr., 22335 Hamburg (DE); Wendt, Matthias, Dr., 22335 Hamburg (DE)
(74) Vertreter: Peters, Carl Heinrich, Dipl.-Ing.

(56) Entgegenhaltungen:
- GB-A- 2 142 194
- PATENT ABSTRACTS OF JAPAN vol. 015, no. 479 (E-1141), 5.Dezember 1991 & JP 03 207271 A (DAIKIN IND LTD), 10.September 1991,

## Beschreibung

Die Erfindung bezieht sich auf eine Schaltungsanordnung zum Speisen einer Last.

Aus der US-PS 4 626 763 ist ein Motorsteuergerät zum Steuern der Geschwindigkeit eines Motors als Funktion einer Rechteckschwingung mit variabler Frequenz und von Zerhackerimpulsen bekannt. In diesem Gerät wird ein dreiphasiger Elektromotor mit rechteckförmigen Spannungen gespeist, die sich aus einer Rechteckwelle mit Grundfrequenz entsprechend der Drehzahl des Motors und überlagerten, in ihrer Breite variablen Impulsen zusammensetzen. Diese rechteckförmigen Spannungen werden abgeleitet aus einer ersten Rechteckschwingung, deren Frequenz dem Sechsfachen der Frequenz bzw. Drehgeschwindigkeit des Motors entspricht, und einer zweiten Schwingung, deren Frequenz groß gegenüber der Frequenz der ersten Schwingung ist. Die resultierenden Spannungen weisen dann in einigen der Zeitabschnitte zwischen je zwei Impulsen der ersten Schwingung durchgehend konstante Werte, in anderen dieser Zeitabschnitte einen hochfrequenten Rechteckimpuls-Verlauf auf.

Eine entsprechende Anordnung mit entsprechenden zeitlichen Verläufen der Spannungen an den Phasen eines Drehstrommotors zeigt auch die US-PS 4,602,201.

Ein periodisch gesteuerter Wechsel des Nullvektors ist aus JP0320271 bekannt. In einer Steuerung der Modulation eines PWM Umrichters wird der Nullvektor, d.h. das kurzzeitige Schalten sämtlicher Phasen auf ein gleiches Potential, automatisch jeweils nach Durchlauf des elektrischen Winkels von Pi/3 durchgeführt.

Bei den in den ersten zwei Schriften dargestellten Schaltungsanordnungen bestimmt die Frequenz der ersten Schwingung die Drehzahl der angetriebenen Drehstrommotoren. Die Frequenz der ersten Schwingung wird daher gemäß der gewünschten bzw. vorhandenen Drehzahl des Motors variiert. Für niedrige Drehzahlen ergeben sich damit niedrige Frequenzen der ersten Schwingung und entsprechend große zeitliche Abstände der diese Schwingung bildenden Impulse. Entsprechend weisen die einzelnen Spannungen an den Motorphasen große Zeitintervalle mit konstantem Spannungswert auf. Es kann nun wünschenswert sein, diese Zeitspannen ohne Beeinflussung des Motorbetriebs, insbesondere ohne Beeinflussung der Drehzahl, zu verringern.

Aus der GB-OS 2,142,194 ist es bekannt, zum Verändern des Oberwellengehalts der einen dreiphasigen Asynchronmotor speisenden Spannungen und insbesondere zum Verringern der negativen Einflüsse Harmonischer niedriger Ordnung bei niedrigen Geschwindigkeiten zu Beginn und gegen Ende jeder Halbperiode der speisenden Rechteckspannung Impulsmodulationen einzufügen und zusätzlich in der Mitte der Impulse der Rechteckspannungen eine Spannungszerhackung einzuführen. Dadurch werden zwar die Zeitintervalle konstanter Spannung in den den Dreiphasenmotor speisenden Rechteckspannungen insgesamt verkürzt, dabei werden jedoch die Spannungsverläufe insgesamt verändert.

Beim Betrieb einer Last aus einer einen Wechselrichter umfassenden Schaltungsanordnung kann jedoch der Fall eintreten, daß unter bestimmten Betriebsbedingungen eine konstante Spannung einer bestimmten Polarität über einen bestimmten Zeitraum hinaus an einen Anschluß der Last angelegt wird. Ist nun erwünscht, das Anliegen dieser konstanten Spannung der bestimmten Polarität auf den genannten Zeitraum zu begrenzen, wird eine Veränderung des Spannungswertes zur Folge haben, daß der der Last aufzuprägende Spannungsverlauf in unerwünschter Weise verändert wird. Beispielsweise würde bei der Speisung eines Drehstrommotors bei hinreichend niedriger Drehzahl ein Spannungsverlauf auftreten, der von demjenigen bei höheren Drehzahlen unkontrolliert abweicht. Ist insbesondere der Spannungsverlauf für die hohen Drehzahlen auf optimale Betriebsbedingungen des Motors ausgelegt, beispielsweise zum Erzielen eines möglichst niedrigen Gehalts an unerwünschten Oberschwingungen oder zur Verminderung von nachteiligen Ausgleichsvorgängen, werden diese optimalen Betriebsbedingungen bei niedrigen Drehzahlen gegebenenfalls empfindlich gestört.

Die Erfindung hat die Aufgabe, eine Schaltungsanordnung zum Speisen einer Last zu schaffen, bei der in allen Betriebsfällen das Verharren einer Spannung an einem Anschluß der Last auf einem bestimmten Spannungswert über eine vorgegebene Zeit hinaus ohne Beeinträchtigung der Betriebsweise vermieden wird.

Diese Aufgabe wird erfindungsgemäß gelöst durch eine Schaltungsanordnung zum Speisen einer Last mit einer Anzahl von n Anschlüssen über einen eine Anzahl von n Zweigen aufweisenden Wechselrichter, in dem durch jeden der Zweige je einer der Anschlüsse der Last wahlweise mit einem ersten oder einem zweiten Anschluß einer Spannungsquelle verbindbar ist, wodurch der Last ein Spannungsvektor mit einer Anzahl von n Komponenten zugeführt wird, welche je zwei Werte annehmen können, die durch an den Anschlüssen der Spannungsquelle von dieser gelieferte Spannungswerte gebildet sind, mit einer Steuerschaltung, durch die die n Komponenten des Spannungsvektor in zeitlich vorgegebener Abfolge auf die beiden möglichen Werte einstellbar sind, so daß der Spannungsvektor eine vorgegebene Funktion der Zeit annimmt, in der in regelmäßig wiederkehrenden Zeitintervallen alle n Komponenten denselben Wert annehmen (sogenannter Nullvektor), wobei für den Fall, daß wenigstens eine der Komponenten des Spannungsvektors über eine vorbestimmte Zeitspanne ausschließlich einen ersten der beiden Werte annimmt, der nächstfolgende Nullvektor mit dem zweiten der beiden Werte gebildet wird.

Die erfindungsgemäße Schaltungsanordnung ist sehr universell für mehrphasige Lasten verschiedenster Arten einsetzbar. Insbesondere eignet sie sich für das Speisen drehzahlvariabler, mehrphasiger Antriebe. Dabei stellt sich als wichtigste Vorbedingung, daß in regelmäßig wiederkehrenden Zeitintervallen ein sogenannter Nullvektor auftritt. Das bedeutet, daß alle Komponenten des Spannungsvektors, d.h. alle an den Anschlüssen der Last vorhandenen Spannungen, denselben Wert annehmen. In den Zeitintervallen, in denen dieser Zustand auftritt, ist somit die Last bezüglich sämtlicher ihrer Anschlüsse kurzgeschlossen. In diesem Fall ist es unerheblich, über welchen der Anschlüsse der Spannungsquelle dieser Kurzschluß erfolgt. Er kann daher über den gewünschten Anschluß der Spannungsquelle, d. h. über den gewünschten der beiden Werte der Komponenten des Spannungsvektors gebildet werden. Auf diese Weise kann für alle Komponenten des Spannungsvektors die Zeitspanne, während der sie ausschließlich einen der beiden Werte annehmen, wirksam begrenzt werden, ohne daß dadurch Auswirkungen auf den Betrieb der Last entstehen. Insbesondere werden dadurch keine unerwünschten Oberwellen oder Ausgleichsvorgänge hervorgerufen.

Ein bevorzugter Einsatz der Erfindung ergibt sich, wenn zumindest ein Teil der n Komponenten des Spannungsvektors zeitweise eine pulsweitenmodulierte Funktion der Zeit bildet. Zumindest die einzelnen Impulse dieser Funktion bilden dann regelmäßig wiederkehrende Zeitintervalle, in denen bevorzugt Nullvektoren auftreten. Ein besonders bevorzugtes Anwendungsgebiet ergibt sich für den Fall, daß gleichzeitig nicht alle der n Komponenten des Spannungsvektors pulsweitenmoduliert sind, wobei wahlweise einige Komponenten überwiegend oder durchgehend und andere wenig oder gar nicht pulsweitenmoduliert sein können, jedoch auch alle Komponenten nacheinander im Wechsel in vorbestimmter Reihenfolge in bestimmten Zeitabschnitten pulsweitenmoduliert, in den übrigen Zeitabschnitten dagegen konstant sein können. Damit ergibt sich ein sehr breites Anwendungsgebiet für die erfindungsgemäße Schaltungsanordnung, da eine Vielzahl unterschiedlicher Fallgestaltungen für das Speisen der Last mit der Erfindung angewendet werden können.

In einem vorteilhaften Einsatzfall der erfindungsgemäßen Schaltungsanordnung führt der erste Anschluß der Spannungsquelle als den ersten der beiden Werte der Komponenten im wesentlichen einen hohen Spannungswert und der zweite Anschluß der Spannungsquelle als den zweiten der beiden Werte der Komponenten den Spannungswert des Massepotentials. Diese Festlegung der Spannungswerte eignet sich insbesondere für eine Ausgestaltung der erfindungsgemäßen Schaltungsanordnung, die sich dadurch auszeichnet, daß je ein Zweig des Wechselrichters zwei Halbleiterschalter umfaßt, von denen ein erster zwischen dem ersten Anschluß der Spannungsquelle und dem zugehörigen Anschluß der Last und ein zweiter zwischen dem zugehörigen Anschluß der Last und dem zweiten Anschluß der Spannungsquelle angeordnet ist, daß zu jedem Halbleiterschalter eine Treiberschaltung vorgesehen ist und daß die Treiberschaltungen eines Zweiges des Wechselrichters aus einer gemeinsamen Treiber-Versorgungsspannungsquelle gespeist werden, an die die (erste) Treiberschaltung des ersten Halbleiterschalters über eine Diode und die (zweite) Treiberschaltung des zweiten Halbleiterschalters unmittelbar angeschlossen sind. Diese Anordnung ist besonders einfach aufgebaut und eignet sich daher bevorzugt für die Anwendung in Großserienprodukten. Die Erfindung ermöglicht für diesen Anwendungsfall die Schaffung eines leistungsfähigen, störungsarmen Antriebs mit sehr preiswerten Mitteln.

Ausführungsbeispiele der Erfindung sind in der Zeichnung dargestellt, in der
Fig. 1 das Prinzipschaltbild eines aus einer Gleichspannungsquelle gespeisten, dreiphasen Motors,
Fig. 2 einige Signalverläufe zu Fig. 1,
Fig. 3 ein detaillierteres Ausführungsbeispiel und
Fig. 4 eine detaillierte Darstellung eines Wechselrichters für den Einsatz der Erfindung zeigt.

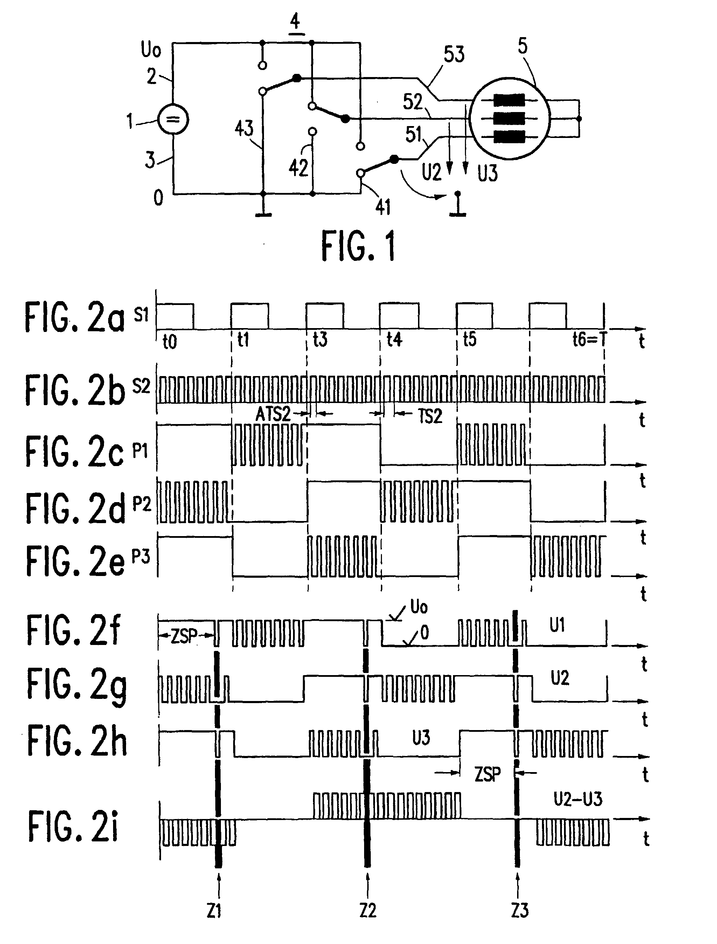

In Fig. 1 ist mit dem Bezugszeichen 1 eine Spannungsquelle bezeichnet, die einen ersten Anschluß 2 und einen zweiten Anschluß 3 aufweist. Zwischen ihren Anschlüssen 2, 3 führt die Spannungsquelle im wesentlichen eine Gleichspannung der Größe Uo. Der zweite Anschluß 3 ist mit Masse verbunden und führt daher als Spannungswert Massepotential 0. Entsprechend führt der erste Anschluß der Spannungsquelle 1 einen hohen Spannungswert Uo.

Fig. 1 zeigt weiterhin schematisch einen Wechselrichter 4 sowie einen eine Last 5 bildenden Motor. Die Last 5 weist eine Anzahl von n=3 Anschlüssen 51, 52 bzw. 53 auf, von denen jeder mit einem zugehörigen Zweig 41, 42 bzw. 43 des Wechselrichters 4 verbunden ist. Durch jeden der Zweige 41, 42 bzw. 43 ist der zugehörige Anschluß 51, 52 bzw. 53 der Last 5 wahlweise mit dem ersten Anschluß 2 oder dem zweiten Anschluß 3 der Spannungsquelle 1 verbindbar. Demgemäß sind die Zweige 41, 42, 43 des Wechselrichters 4 in Fig. 1 schematisch mit je einem Umschalter dargestellt. Durch die Zweige 41, 42, 43 des Wechselrichters 4 werden den Anschlüssen 51, 52 bzw. 53 der Last 5 Spannungen U1, U2 bzw. U3 zugeführt. Diese Spannungen U 1, U2, U3 stellen einen Spannungsvektor dar, der in verallgemeinerter Form eine Mehrzahl von Komponenten, im allgemeinen Fall n Komponenten U1, U2, U3, ..., Un, aufweist. Diese Komponenten können jede für sich zwei verschiedene Werte annehmen, die durch die an den Anschlüssen 2, 3 der Spannungsquelle 1 von dieser gelieferten Spannungswerte Uo bzw. 0 gebildet sind. Die Umschalter in den Zweigen 41, 42, 43 - im allgemeinen bis 4n - sind durch eine in Fig. 1 nicht dargestellte Steuerschaltung so einstellbar, daß der Last 5 in zeitlich vorgegebener Abfolge vorbestimmte Spannungsvektoren zugeführt werden können, daß also die n Komponenten des Spannungsvektors in dieser zeitlich vorgegebenen Abfolge auf ihre beiden möglichen Werte 0 und Uo einstellbar sind. Der Spannungsvektor nimmt damit eine vorgegebene Funktion der Zeit an.

Fig. 2 zeigt in einer Reihe von Diagrammen einige Signalverläufe zur Speisung der Last 5 in Fig. 1. Diese Signalverläufe können mit Hilfe der erwähnten Steuerschaltung verarbeitet bzw. erzeugt werden. Ein Beispiel dafür findet sich in den eingangs genannten US-Patentschriften 4 626 763 und 4 602 201, auf die hiermit ausdrücklich Bezug genommen wird. Von einer detaillierten Beschreibung des Aufbaus einer derartigen Steuerschaltung und ihrer Funktion wird daher im Rahmen der Beschreibung dieses Ausführungsbeispiels abgesehen.

Der Steuerung des als Last 5 dienenen Motors liegt ein rechteckförmiges Signal gemäß Fig. 2a) zugrunde, dessen Frequenz dem Sechsfachen der Umdrehungsfrequenz (im einfachsten Fall) des Motors entspricht. Durch dieses erste Signal S1, welches die Umdrehungsfrequenz des Motors 5 vorgibt, wird eine Umdrehungsperiode T des Motors 5 in sechs gleiche Zeitabschnitte aufgeteilt, die zu den Zeitpunkten t0 bis t5 entsprechend ansteigenden Flanken des ersten Signals S1 beginnnen; der Zeitpunkt t6 entspricht dem Ende einer Umdrehungsperiode T. Mit t ist die Zeitachse in den Diagrammen nach Fig. 2 bezeichnet.

Fig. 2b) zeigt den zeitlichen Verlauf eines zweiten Signals S2, der ebenfalls rechteckförmig ist und dessen Frequenz groß gegen die Frequenz des ersten Signals S1 bemessen ist. Eine Periodendauer des zweiten Signals S2 ist mit TS2 bezeichnet, eine Impulslänge innerhalb dieser Periodendauer TS2 ist mit ATS2 benannt. Die Frequenz des zweiten Signals S2 wird unabhängig vom Betriebszustand des Motors 5, d.h. unabhängig von der Frequenz des ersten Signals S1, auf einem konstanten Wert gehalten. Jedoch kann die Impulsdauer ATS2 des zweiten Signals S2 pulsweitenmoduliert werden, d.h. je nach Bedarf zwischen 0 TS2 eingestellt werden. Dies dient der Formung zeitlicher Verläufe für den Spannungsvektor U1, U2, U3, auf die in der eingangs zitierten Literatur näher eingegangen ist. In Fig. 2 ist der Einfachheit halber nur auf einen Signalverlauf mit konstantem Tastverhältnis zwischen der Impulsdauer ATS2 und der Periodendauer TS2 Bezug genommen.

Aus den beiden beschriebenen Signalen S1 und S2 wird in an sich bekannter Weise durch eine Pulsweiten-Modulationsschaltung ein Signalvektor mit Komponenten P1, P2, P3 (und im allgemeinen bis Pn) erzeugt, deren zeitliche Verläufe in den Fig. 2c), 2d) und 2e) wiedergegeben sind. Mit diesen Signalen P1, P2, P3 können die Zweige 41, 42 bzw. 43 des Wechselrichters 4 in Fig. 1 in der Weise angesteuert werden, daß beim Auftreten eines hohen Signalpegels in einem der Signale P1, P2 bzw. P3 der zugehörige Zweig 41, 42 bzw. 43 des Wechselrichters 4 den mit ihm verbundenen Anschluß 51, 52 bzw. 53 der Last 5 mit dem ersten Anschluß 2 der Spannungsquelle 1 und bei niedrigem Pegel der Signale P1, P2 bzw. P3 mit dem zweiten Anschluß 3 verbindet. Entsprechend wird sich durch den Signalvektor P1, P2, P3 an der Last 5 ein Spannungsvektor U1, U2, U3 einstellen, der einem Drehstromsystem entspricht. Im dargestellten Beispiel sind die Komponenten P1, P2, P3 des Signalvektors nur abschnittsweise gemäß dem Verlauf des zweiten Signals S2 gepulst, in den übrigen Zeitabschnitten jedoch konstant. Beispielsweise weist die erste Komponente P1 des Signalvektors und damit die Spannung U1 als erste Komponente des Spannungsvektors an der Last 5 im ersten Zeitabschnitt zwischen den Zeitpunkten t0 und t1 einen konstanten Wert auf, im Zeitabschnitt zwischen t1 und t2 ist sie gemäß S2 gepulst, zwischen t2 und t3 weist sie einen konstanten, hohen Wert auf, zwischen t3 und t4 einen konstanten, niedrigen Wert, zwischen t4 und t5 ist sie wiederum gepulst und zwischen t5 und t6 noch einmal konstant auf niedrigem Wert. Gegenüber einem durchgängig gepulsten Verlauf hat diese Signalform den Vorteil, daß je Zeiteinheit weniger Schaltvorgänge und damit geringere Schaltverluste in den Wechselrichterzweigen 41, 42, 43 auftreten.

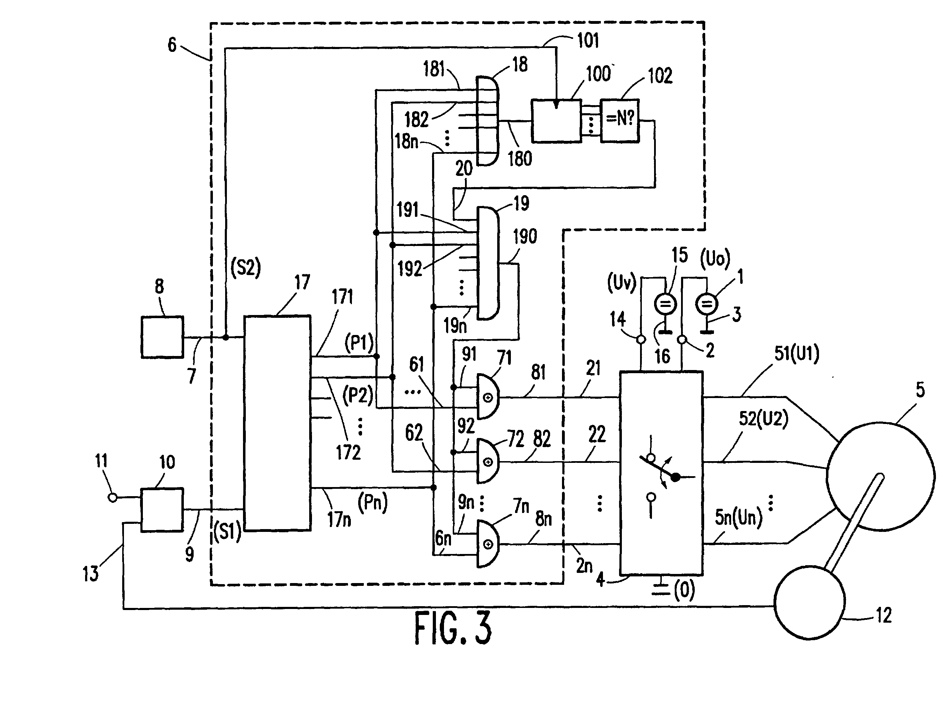

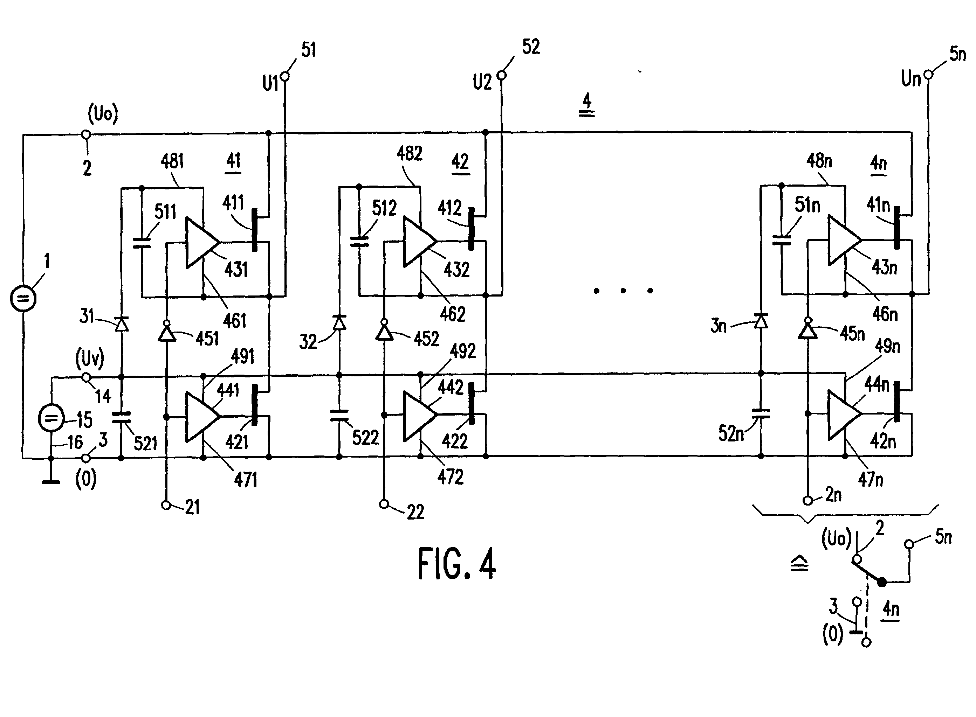

Die im Vergleich zur Periodendauer TS2 des zweiten Signals S2 langen Zeitabschnitte, in denen die Signale P1, ... und entsprechend die Spannungen U1, ... konstante Werte aufweisen, können bei geringen Umdrehungsfrequenzen des Motors 5 unerwünscht große Ausdehnungen annehmen. Es kann dann erwünscht sein, innerhalb dieser Zeitabschnitte zumindest kurzzeitig den Wert der betreffenden Komponente des Signalvektors bzw. des Spannungsvektors zu ändern. Die betrieblichen oder konstruktiven Gründe dafür können vielfältig sein; ein Beispiel dafür wird im Zusammenhang mit den Fig. 3 und Fig. 4 nachfolgend beschrieben werden. Diesem Beispiel, jedoch auch demjenigen nach Fig. 2, sei der Fall zugrunde gelegt, daß wenigstens eine der Komponenten des Spannungsvektors U1, ... über eine vorbestimmte Zeitspanne hinaus innerhalb eines der durch die Zeitpunkte t0 bis t6 begrenzten Zeitabschnitte den hohen Wert Uo annimmt. Erfindungsgemäß soll dann erzielt werden, daß die genannte Komponente des Spannungsvektors U1, ... spätestens nach Ablauf dieser vorbestimmten Zeitspanne zumindest kurzzeitig den niedrigen Wert 0 annimmt, ohne daß die dadurch bedingte Änderung des Spannungsvektors U1, ... zu einer Änderung der Spannungen zwischen den Anschlüssen 51, 52, 53 der Last 5 führt. Als Beispiel für eine der Spannungen zwischen den Anschlüssen 51, 52, 53 des Motors 5 ist die Differenz der Spannungen U2 und U3 zwischen dem zweiten Anschluß 52 und dem dritten Anschluß 53 in Fig. 2i) aufgetragen. Es ist ersichtlich, daß eine Unterbrechung des Signalverlaufs von P3 gemäß Fig. 2e) im Zeitabschnitt zwischen t0 und t1 zu einer Veränderung des Spannungsverlaufs gemäß Fig. 2i) in diesem Bereich führen muß. Eine derartige Veränderung ist jedoch unerwünscht.

Erfindungsgemäß wird nun nach Ablauf der vorbestimmten Zeitspanne, die in Fig. 2 mit ZSP bezeichnet ist, der nächstfolgende Nullvektor des Spannungsvektors U1, ... invertiert. Dieser Nullvektor, d.h. ein Zustand des Spannungsvektors U1, ..., in dem alle Komponenten U1, ... des Spannungsvektors denselben Wert annehmen, wird im Zeitabschnitt zwischen den Zeitpunkten t0 und t1 immer dann auftreten, wenn alle Komponenten U1, ... des Spannungsvektors den hohen Wert annehmen. Da in diesem Zeitabschnitt auch die Komponente U3 konstant den hohen Wert Uo aufweist, tritt der Nullvektor in jedem Impuls der Spannung U2 mit hohem Wert Uo auf. Nach Ablauf der vorbestimmten Zeitspanne ZSP erfolgt dieses Auftreten im Zeitintervall Z1. Durch Invertieren dieses Nullvektors werden während des Zeitintervalls Z1 alle Komponenten U1, ... des Spannungsvektors auf den niedrigen Wert 0 umgeschaltet. Dies ist für die Komponenten U1, ... des Spannungsvektors in den Fig. 2f), 2g) bzw. 2h) dargestellt. Wie aus Fig. 2i) entnehmbar ist, bedeutet dieses Umschalten für die Spannungen über den Anschlüssen 51, 52 bzw. 53 der Last 5 keine Veränderung.

Im Zeitabschnitt zwischen den Zeitpunkten t1 und t2 nehmen die Komponenten U2 und U3 des Spannungsvektors durchgehend den niedrigen Wert 0 an, wohingegen U1 nach Maßgabe des zweiten Signals S2 zwischen dem hohen Wert Uo und dem niedrigen Wert 0 hin- und hergeschaltet wird. In diesem Zeitabschnitt wird daher in mit einer Wiederholfrequenz entsprechend der Frequenz des zweiten Signals S2 regelmäßig wiederkehrenden Zeitintervallen ein Nullvektor über den niedrigen Spannungswert 0 am zweiten Anschluß 3 der Spannungsquelle 1 gebildet. Da der Abstand dieser Zeitintervalle, in denen ein Nullvektor auftritt, kleiner ist als die vorbestimmte Zeitspanne ZSP, findet zwischen den Zeitpunkten t1 und t2 eine Inversion des Nullvektors nicht statt.

Das gleiche gilt für die Zeitabschnitte zwischen den Zeitpunkten t3 und t4 sowie t5 und t6. Dagegen treten in den Zeitabschnitten zwischen den Zeitpunkten t2 und t3 sowie t4 und t5 in den Komponenten P1 und P2 bzw. P2 und P3 über mehr als die vorbestimmte Zeitspanne ZSP hindurch konstante hohe Werte auf. Demzufolge wird in diesen Zeitabschnitten wiederum die Inversion des Nullvektors angewendet, und zwar in den in Fig. 2 mit Z2 und Z3 bezeichneten Zeitintervallen.

Das Ausführungsbeispiel nach Fig. 3 zeigt blockschematisch eine Speisung für einen mehrphasigen Motor unter Einsatz der erfindungsgemäßen Schaltungsanordnung. Zu den Fig. 1 und 2 beschriebene Merkmale sind wieder mit den selben Bezugszeichen versehen. Eine Steuerschaltung 6 ist über einen ersten Eingang 7 an einen ersten Signalgeber 8 angeschlossen, der der Steuerschaltung 6 über den ersten Eingang 7 das zweite Signal S2 zuführt. Über einen zweiten Eingang 9 erhält die Steuerschaltung 6 das erste Signal S1 zugeführt. Dieses wird in einer Regelstufe 10 aus einem die erwünschte Drehzahl des Motors 5 darstellenden, über einen Solleingang 11 der Regelstufe 10 zugeleiteten Sollsignal und einem aus einem Dreh- bzw. Positionsgeber 12, der mit dem Motor 5 verbunden ist, abgeleiteten Istsignal, welches der Regelstufe 10 über einen Isteingang 13 zugeleitet wird, gebildet. In Abhängigkeit der gewünschten Motordrehzahl (11) wird man je nach Motorcharakteristik auch den Testgrad des Signals (7) der Steuerschaltung (8) verändern. An Wechselrichter-Steueranschlüssen 21, 22, ..., 2n ist die Steuerschaltung 6 mit dem Wechselrichter 4 verbunden. Dabei ist jeder der Wechselrichter-Steueranschlüsse 21, 22, ..., 2n einem der Zweige 41, 42, ..., 4n des Wechselrichters 4 zugeordnet, wie er in Fig. 1 grob schematisch für einen dreiphasigen Motor 5 speziell und in Fig. 4 in einem allgemeiner einsetzbaren, detaillierter dargestellten Ausführungsbeispiel wiedergegeben ist. Der Wechselrichter 4 nach Fig. 4 umfaßt in jedem seiner Zweige 41, 42, ..., 4n zwei mit ihren Hauptstrompfaden in Reihe zwischen dem ersten und dem zweiten Anschluß 2 bzw. 3 der Spannungsquelle 1 angeordnete Lasttransistoren 411, 421 bzw. 412, 422 ... bzw. 41 n, 42n. Die Lasttransistoren 411, 421, ... bilden Halbleiterschalter für den Wechselrichter 4, von denen der jeweils erste zwischen dem ersten Anschluß 2 der Spannungsquelle 1 und dem zugehörigen Anschluß 51, ... der Last 5 und der zweite zwischen dem Anschluß 51, ... der Last 5 und dem zweiten Anschluß 3 der Spannungsquelle 1 angeordnet ist. Zu jedem der Lasttransistoren 411, 421, ... ist eine Treiberschaltung 431, 441 bzw. 432, 442 ... bzw. 43n, 44n vorgesehen, deren Ausgang mit dem Steueranschluß des zugehörigen Lasttransistors 411, 421, ... verbunden ist. Die Treiberschaltungen 431, 441 bzw. 432, 442 bzw. ... 43n, 44n jedes der Zweige 41 bzw. 42 ... bzw. 4n sind an ihren Eingängen über je einen für hohe Sperrspannungen angelegten Inverter 451 bzw. 452 ... bzw. 45n miteinander verbunden, wobei die zweiten Treiberschaltungen 441 bzw. 442 ... bzw. 44n zu den zweiten Lasttransistoren 421 bzw. 422 ... bzw. 42n mit ihren Eingängen an die zugehörigen Wechselrichter-Steueranschlüsse 21 bzw. 22 ... bzw. 2n angeschlossen sind. Die ersten Treiberschaltungen 431 bzw. 432 ... bzw. 43n sind mit je einem ersten ihrer Versorgungsspannungsanschlüsse 461 bzw. 462 ... bzw. 46n mit dem zugehörigen Anschluß 51 bzw. 52 ... bzw. 5n der Last 5, d.h. auch mit dem Verbindungspunkt der Hauptstrompfade der zugehörigen Lasttransistoren 411, 421 bzw. 412, 422 ... bzw. 41n, 42n verbunden. Entsprechend sind die zweiten Treiberschaltungen 441 bzw. 442 ... bzw. 44n mit je ihrem ersten Versorgungsspannungsanschluß 471 bzw. 472 ... bzw. 47n mit dem zweiten Anschluß 3 der Spannungsquelle 1 verbunden. Je ein zweiter Versorgungsspannungsanschluß 491 bzw. 492 ... bzw. 49n ist mit einem ersten Anschluß 14 einer gemeinsamen Treiber-Versorgungsspannungsquelle 15 verbunden, die mit ihrem zweiten Anschluß 16 gemeinsam mit der Spannungsquelle 1 an Massepotential 0 liegt. Außerdem ist der erste Anschluß 14 der Treiber-Versorgungsspannungsquelle 15 über je eine Diode 31 bzw. 32 ... bzw. 3n in jedem Zweig 41 bzw. 42 ... bzw. 4n des Wechselrichters 4 mit einem zweiten Versorgungsspannungsanschluß 481 bzw. 482 ... bzw. 48n der dem entsprechenden Zweig zugehörigen ersten Treiberschaltung 431 bzw. 432 ... bzw. 43n verbunden. Der erste und der zweite Versorgungsspannungsanschluß jder der Treiberschaltungen 431 bzw. 432 ... bzw. 43n sind miteinander über je einen Versorgungskondensator 511, 521, 512, 522 ..., 51n, 52n verbunden. In diesem Ausführungsbeispiel werden somit nicht nur die Treiberschaltungen 431, 441, ... eines Zweiges 41, ... des Wechselrichters 4, sondern alle Treiberschaltungen aus einer gemeinsamen Treiber-Versorgungsspannungsquelle 15 gespeist.

In einer praktischen Ausführung des Wechselrichters 4 gemäß Fig. 4 können die Treiberschaltungen 431, 441, ... jedes der Zweige 41, ... in einem gemeinsamen, vorzugsweise integrierten Bauteil zusammengefaßt sein. Für alle Treiberschaltungen 431 wird nur eine Treiber-Versorgungsspannungsquelle 15, die eine Versorgungsspannung Uv abgibt, benötigt. Dadurch wird die Stromversorgung für den Wechselrichter 4 beträchtlich vereinfacht. Die Spannung Uv kann dabei wesentlich kleiner als der Spannungswert Uo sein. In den Zeiten, in denen in einem Zweig 41, ... des Wechselrichters 4 der erste Lasttransistor 411, ... leitend und demgemäß der zweite Lasttransistor 421, ... gesperrt ist, wird dann auch die zugehörige Diode 31, ... gesperrt und die erste Treiberschaltung 431, ... von der Treiber-Versorgungsspannungsquelle 15 getrennt. Die erste Treiberschaltung 431, ... wird dann aus dem angeschlossenen Versorgungskondensator 511, ... mit Energie gespeist. Bleibt nun der erste Lasttransistor 411, ... über die vorbestimmte Zeitspanne ZSP hinaus ununterbrochen im leitenden Zustand und wird somit während dieser Zeitspanne ZSP der Versorgungskondensator 511, ... nicht nachgeladen, kann die Versorgungsspannung für die erste Treiberschaltung 431, ... unter einen zulässigen Mindestwert absinken. Eine Nachladung des zugehörigen Versorgungskondensators 511, ... ist dann erforderlich. Dazu muß der zweite Lasttransistor 421, ... des betreffenden Zweiges 41, ... des Wechselrichters 4 leitend und entsprechend der zugehörige erste Lasttransistor 411, ... gesperrt geschaltet werden. Die anhand der Fig. 2 erläuterte Erfindung stellt dies sicher und gewährleistet dabei gleichzeitig, daß dieser Schaltvorgang für die Last 5 ohne Auswirkungen bleibt.

In Fig. 4 ist für den Zweig 4n des Wechselrichters 4 zur Erläuterung des Zusammenhangs mit der Fig. 1 das symbolische Ersatzschaltbild dieses Zweiges angegeben.

Fig. 3 zeigt ein Ausführungsbeispiel für eine erfindungsgemäße Schaltungsanordnung, mit der die Signalverläufe gemäß Fig. 2f bis 2h erzeugt werden können und die sich zusammn mit dem Wechselrichter 4 gemäß Fig. 4 einsetzen läßt. Die in Fig. 3 skizzierte Steuerschaltung 6 enthält eine Pulsweiten-Modulationsschaltung 17, die in an sich aus der eingangs zitierten Literatur bekannter Weise aus den ihr über die Eingänge 7 bzw. 9 der Steuerschaltung 6 zugeführten Signalen S1 und S2 den Signalvektor P1, P2, ... Pn gemäß Fig. 2c) bis 2e) bildet und an Signalausgängen 171, 172, ..., 17n abgibt. Jeder der Signalausgänge 171, ... ist mit einem ersten Eingang 61, 62, ..., 6n eines Exclusiv-Oder-Gatters 71 bzw. 72 ... bzw. 7n verbunden, dessen Ausgang 81 bzw. 82 ... bzw. 8n mit dem Wechselrichter-Steueranschluß 21 bzw. 22 ... bzw. 2n des Zweiges 41 bzw. 42 ... bzw. 4n des Wechselrichters 4 verbunden ist, dem die zugehörige Komponente P1 bzw. P2 ... bzw. Pn des Signalvektors P1, ... Pn zuzuführen ist. Die Exclusiv-Oder-Gatter 71, 72, ..., 7n dienen als über ihre zweiten Eingänge 91 bzw. 92 ... bzw. 9n steuerbare Inverter. Je nach dem über die zweiten Eingänge 91, 92 ..., 9n zugeführten Signal wird der Signalvektor P1, ... Pn invertiert oder nichtinvertiert übertragen.

Die Signalausänge 171, ... 17n der Pulsweiten-Modulationsschaltung 17 sind außerdem mit Eingängen 181 bzw. 182 ... bzw. 18n eines Oder-Gatters 18 sowie mit Eingängen 191 bzw. 192 ... bzw. 19n eines Und-Gatters 19 verbunden. Das Oder-Gatter 18 liefert an seinem Ausgang 180 ein Signal mit einer Information darüber, ob wenigstens eine der Komponenten P1, ... des Signalvektors einen hohen Wert aufweist. Der Ausgang 180 des Oder-Gatters 18 bildet einen Freigabeeingang eines Zählers 100, dem über einen Takteingang 101 das zweite Signal S2 vom ersten Eingang 7 der Steuerschaltung 6 zugeleitet wird. Der Zähler 100 zählt die Impulse des zweiten Signals S2, so lange am Freigabeeingang (bzw. Ausgang 180 des Oder-Gatters 18) ein Signal anliegt, welches wenigstens eine der Komponenten des Signalvektors P1, ... Pn auf hohem Wert signalisiert. Bei Erreichen eines Zählerstands N, der einer Anzahl von Periodendauern TS2 entspricht, die die vorbestimmte Zeitspanne ZSP bildet, wird vom Zähler 100 über eine Decoder-Schaltung 102 ein Signal mit hohem logischem Pegel an einen weiteren Eingang 20 des Und-Gatters 19 geleitet. Beim Auftreten des nächsten Nullvektors, der über den hohen Spannungswert Uo am ersten Anschluß 2 der Spannungsquelle 1 gebildet wird, wenn also alle Komponenten P1, ... des Signalvektors einen hohen Wert annehmen, entsteht am Ausgang 190 des Und-Gatters 19 ebenfalls ein Signal mit hohem logischem Pegel. Dieses wird den zweiten Eingängen 91, ... der Exclusiv-Oder-Gatter 71, ... zugeführt, woraufhin durch diese der anstehende Nullvektor invertiert wird.

## Patentansprüche

1. Schaltungsanordnung zum Speisen einer Last (5) mit einer Anzahl von n Anschlüssen (51, 52, 53, ... , 5n) über einen eine Anzahl von n Zweigen (41, 42, 43, ... , 4n) aufweisenden Wechselrichter (4), in dem durch jeden der Zweige (41, 42, 43, ... , 4n) je einer der Anschlüsse (51, 52, 53, ... , 5n) der Last (5) wahlweise mit einem ersten (2) oder einem zweiten (3) Anschluß einer Spannungsquelle (1) verbindbar ist, wodurch der Last (5) ein Spannungsvektor mit einer Anzahl von n Komponenten (U1, U2, U3, ..., Un) zugeführt wird, welche je zwei Werte (Uo, 0) annehmen können, die durch an den Anschlüssen (2, 3) der Spannungsquelle (1) von dieser gelieferte Spannungswerte gebildet sind, mit einer Steuerschaltung (6), durch die die n Komponenten (U1, U2, U3, ... , Un) des Spannungsvektors in zeitlich vorgegebener Abfolge auf die beiden möglichen Werte (Uo, 0) einstellbar sind, so daß der Spannungsvektor eine vorgegebene Funktion der Zeit (t) annimmt, in der in regelmäßig wiederkehrenden Zeitintervallen alle n Komponenten (U1, U2, U3, ... , Un) denselben Wert annehmen (sogenannter Nullvektor),
**dadurch gekennzeichnet, daß** für den Fall, daß wenigstens eine der Komponenten (U1, U2, U3, ... , Un) des Spannungsvektors über eine vorbestimmte Zeitspanne (ZSP) ausschließlich einen ersten der beiden Werte (Uo, 0) annimmt, der nächstfolgende Nullvektor mit dem zweiten der beiden Werte (Uo, 0) gebildet wird.

2. Schaltungsanordnung nach Anspruch 1, **dadurch gekennzeichnet, daß** zumindest ein Teil der n Komponenten des Spannungsvektors zeitweise eine pulsweitenmodulierte Funktion der Zeit bildet.

3. Schaltungsanordnung nach Anspruch 1 oder 2, **dadurch gekennzeichnet, daß** der erste (2) Anschluß der Spannungsquelle (1) als den ersten der beiden Werte der Komponenten im wesentlichen einen hohen Spannungswert (Uo) und der zweite (3) Anschluß der Spannungsquelle als den zweiten der beiden Werte der Komponenten den Spannungswert des Massepotentials (0) führt.

4. Schaltungsanordnung nach Anspruch 3, **dadurch gekennzeichnet, daß** je ein Zweig des Wechselrichters (4) zwei Halbleiterschalter (411, 421, ..., 41n, 42n) umfaßt, von denen ein erster (411, ..., 41n) zwischen dem ersten (2) Anschluß der Spannungsquelle (1) und dem zugehörigen Anschluß der Last (51, 52, ... 5n) (421, ..., 42n) und ein zweiter zwischen dem zugehörigen Anschluß der Last (51, 52, ... 5n) und dem zweiten (3) Anschluß der Spannungsquelle (1) angeordnet ist, daß zu jedem Halbleiterschalter eine Treiberschaltung (431, 471, ..., 43n, 47n) vorgesehen ist und daß die Treiberschaltungen eines Zweiges des Wechselrichters (4) aus einer gemeinsamen TreiberVersorgungsspannungsquelle (15) gespeist werden, an die die (erste) (431, ... 43n) Treiberschaltung des ersten Halbleiterschalters über eine Diode (31, 32,...,3n) und die (zweite) (471, 472,...47n) Treiberschaltung des zweiten Halbleiterschalters unmittelbar angeschlossen sind.

## Claims

1. A circuit arrangement for powering a load (5) having a number of n terminals (51, 52, 53, ..., 5n) via a power inverter (4) comprising a number of n branches (41, 42, 43, ..., 4n), in which one of the terminals (51, 52, 53, ..., 5n) of the load (5) is optionally connectable to a first (2) or a second (3) terminal of a voltage source (1) by each of the branches (41, 42, 43, ..., 4n), as a result of which a voltage vector having a number of n components (U1, U2, U3, ..., Un) is applied to the load (5), which components can each assume two values (Uo, 0) constituted by the voltage values produced by the voltage source on the terminals (2, 3) of this source (1), which arrangement comprises a control circuit (6) by means of which the n components (U1, U2, U3, ..., Un) of the voltage vector can be set to the two possible values (Uo, 0) in a given time sequence, so that the voltage vector complies with a given function of time (t) in which all n components (U1, U2, U3, ..., Un) assume the same value (referred to as null vector) in regularly recurring time intervals, **characterized in that** the next null vector is formed with the second one of the two values in the case in which at least one of the components (U1, U2, U3, ..., Un) of the voltage vector assumes exclusively a first one of the two values (Uo, 0) for a given period of time.

2. A circuit arrangement as claimed in Claim 1, **characterized in that** at least some of the n components of the voltage vector are temporarily pulse-width modulated as a function of time.

3. A circuit arrangement as claimed in Claim 1 or 2, **characterized in that** the first terminal (2) of the voltage source (1) essentially carries a high voltage value (Uo) as the first one of the two values of the components, and the second (3) terminal of the voltage source (1) carries ground potential (0) as the second one of the two values of the components.

4. A circuit arrangement as claimed in Claim 3, **characterized in that** each branch of the power inverter (4) comprises two semiconductor switches (411, 421, ..., 41n, 42n), of which a first one (411, ..., 41n) is disposed between the first terminal (2) of the voltage source (1) and the associated terminal (51, 52, 53,..., 5n) of the load and of which a second one (421, ..., 42n) is disposed between the associated terminal (51, 52, 53, ..., 5n) of the load and the second terminal (3) of the voltage source (1), **in that** a driver circuit (431, 471, ..., 43n, 47n) is provided for each semiconductor switch, and **in that** the driver circuits of one branch of the power inverter (4) are powered from a common drive supply voltage source (15) to which the (first) driver circuit (431, ..., 43n) of the first semiconductor switch is connected via a diode (31, 32, ..., 3n) and the (second) driver circuit of the second semiconductor switch is connected directly.

## Revendications

1. Circuit pour alimenter une charge (5) avec un nombre de n bornes (51, 52, 53, ..., 5n) par l'intermédiaire d'un onduleur (4) présentant un nombre de n branches (41, 42,43,..., 4n) dans lequel une des bornes (51, 52, 53, ..., 5n) respectives de la charge peut être reliée au choix avec une première (2) ou une deuxième (3) borne d'une source de tension (1) par chacune des branches (41, 42, 43, ..., 4n), si bien qu'il est amené à la charge (5) un vecteur de tension avec un nombre de n composantes (U1, U2, U3, .., Un) qui peuvent adopter respectivement deux valeurs (Uo, 0) formées par les valeurs de tension délivrées aux bornes (2, 3) de la source de tension (1) par celle-ci, avec un circuit de commande (6) par lequel les n composantes (U1, U2, U3, ..., Un) du vecteur de tension sont réglables dans une séquence déterminée temporellement sur les deux valeurs possibles (Uo, 0), de telle sorte que le vecteur de tension adopte une fonction prédéterminée du temps (t) dans laquelle toutes les n composantes (U1, U2, U3, ..., Un) adoptent la même valeur (le vecteur dit zéro) à intervalles temporels régulièrement récurrents,
**caractérisé en ce**
**qu'**au cas où au moins une des composantes (U1, U2, U3, ..., Un) du vecteur de tension adopte exclusivement une première des deux valeurs (Uo, 0) sur un intervalle de temps prédéterminé (ZSP), le facteur zéro suivant est formé avec la deuxième des deux valeurs (Uo, 0).

2. Montage selon la revendication 1, **caractérisé en ce**
**qu'**au moins une partie des n composantes du vecteur de tension forme temporairement une fonction du temps à modulation de largeur d'impulsion.

3. Montage selon l'une des revendications 1 ou 2, **caractérisé en ce**
**que** la première (2) borne de la source de tension (1) conduit essentiellement une valeur de tension élevée (Uo) en tant que première des deux valeurs des composantes, et la deuxième (3) borne de la source de tension (1) conduit la valeur de tension du potentiel de masse (0) en tant que deuxième des deux valeurs des composantes.

4. Montage selon la revendication 3, **caractérisé en ce**
**qu'**une branche respective de l'onduleur (4) comprend deux commutateurs à semi-conducteurs (411, 421, ..., 41n, 42n) dont un premier (411, ..., 41n) est disposé entre la première (2) borne de la source de tension (1) et la borne correspondante de la charge (51, 52, ..., 5n) (41, 42, ..., 4n) et un deuxième entre la borne correspondante de la charge (51, 52,..., 5n) et la deuxième borne (3) de la source de tension (1), qu'il est prévu un circuit d'attaque (431, 571, ..., 43n, 47n) pour chacun des commutateurs à semi-conducteurs et que les circuits d'attaque d'une branche de l'onduleur (4) sont alimentés à partir d'une source commune de tension d'alimentation d'attaque (15) à laquelle le premier (471, ..., 43n) circuit d'attaque du premier commutateur à semi-conducteurs est raccordé par l'intermédiaire d'une diode (31, 32, ..., 3n) et le (deuxième) (471, 472, ..., 47n) circuit d'attaque du deuxième commutateur à semi-conducteurs est raccordé directement.
